# EUROPEAN PATENT APPLICATION

(11) **EP 0 820 844 A2**
(43) Date of publication of application: **28.01.1998**
(21) Application number: 97305620.3
(22) Date of filing: 25.07.1997
(51) Int. Cl.: B27G 5/02

(54) **Jig for sawing etc.**

(30) Priority: 26.07.1996 GB 9615783
(71) Applicant: Tarry, John William, Milton Keynes MK6 5DG (GB)
(72) Inventor: Tarry, John William, Milton Keynes MK6 5DG (GB)
(74) Representative: Gibson, Stewart Harry

(57) **Abstract**

A jig for using a power tool (S) on a workpiece. The jig has a base (10) on which the workpiece is located, and a guide arm assembly (20) pivotally mounted to the base for turning in a plane parallel to the base. The guide arm assembly (20) supports a power tool (S) to travel its length for operating on the workpiece.

## Description

The present invention relates to a jig for using a power tool on a workpiece, and more particularly but not solely to a sawtable.

It is a common requirement for angled cuts to be accurately formed in a workpiece using a power tool such as a reciprocating saw, a circular saw or a routing tool. A number of jigs have been proposed previously, but these have suffered from being complicated in construction or difficult to use or lacking in versatility.

I have now devised a jig which is of straightforward construction, suited to use with modern power tools, straightforward to use and allows an unlimited range of angled cuts to be accurately formed in a workpiece.

In accordance with the present invention, there is provided a jig comprising a base and a guide arm assembly, the guide arm assembly being pivoted to said base for turning in a plane parallel to the base, and arranged to support a power tool to travel along its length to operate upon a workpiece located upon the base. Thus, linear cuts may be accurately formed in the workpiece in accordance with the degree of angular displacement of the guide assembly with respect to the base.

Preferably the guide arm assembly may be locked in place at a required angle so that a particular angle of cut may be set and so repeated as often as necessary in successive workpieces.

Preferably the outer end of the guide arm assembly engages an arcuate outer edge of the base, preferably by means of a tongue-and-groove arrangement

Preferably the guide arm assembly is adjustable to alter the height, above the base, at which the power tool is supported. Thus, varying depths of cut may be formed in a workpiece by a power tool supported by the guide arm assembly.

Preferably the guide arm assembly comprises an arm which extends under the base and supports, at its opposite ends, a portion which extends over the base to support the power tool.

Preferably said support portion comprises one or more rectilinear rails, arranged parallel to the longitudinal axis of the guide arm assembly (which axis extends through the centre of rotation of the arm), for guiding the power tool. Preferably the distance of the or each rail from said longitudinal axis is adjustable. The jig can therefore accommodate any lateral offset in the alignment of the blade or bit of the power tool with respect of its central axis, for example the blade offset typically found in circular-saw arrangements.

Preferably the base is fitted with feet so that the jig may be set up on a bench or work surface. The jig may additionally or instead have extendable legs so that it may be adjusted to a convenient working height.

Preferably the base comprises a projecting faceplate against which a workpiece may be held. Preferably the faceplate extends along a line which passes through the centre of rotation of the guide arm, thus allowing cuts to be angled with respect to a point on the abutting edge of the workpiece.

An embodiment of the present invention will now be described by way of example only and with reference to the accompanying drawings, in which:
FIGURE 1 is a perspective view of a jig in accordance with the present invention;
FIGURE 2 is an exploded perspective view illustrating the component parts of the jig of Figure 1;
FIGURE 3 is a plan view of the jig;
FIGURE 4 is a rear elevation of the jig; and
FIGURE 5 is an end elevation of the jig.

Referring to the drawings, there is shown a jig which comprises a flat base 10 and a guide arm assembly 20 supporting a circular saw S for sliding movement.

The base 10 comprises a panel in the shape of a semi-circle with truncated ends, and formed of wear-resistant material e.g. marine plywood, to withstand the harsh conditions of a building site. The base 10 is covered by a replaceable top of a material which will not damage the saw blade. The arcuate edge of the base 10 subtends an angle of up to 100° at the centre of the straight diametral or front edge of the base, and a tongue 11 is built into the arcuate edge to provide support for the outer end of the guide arm assembly 20. a faceplate 12 is fixed to the front edge of the base.

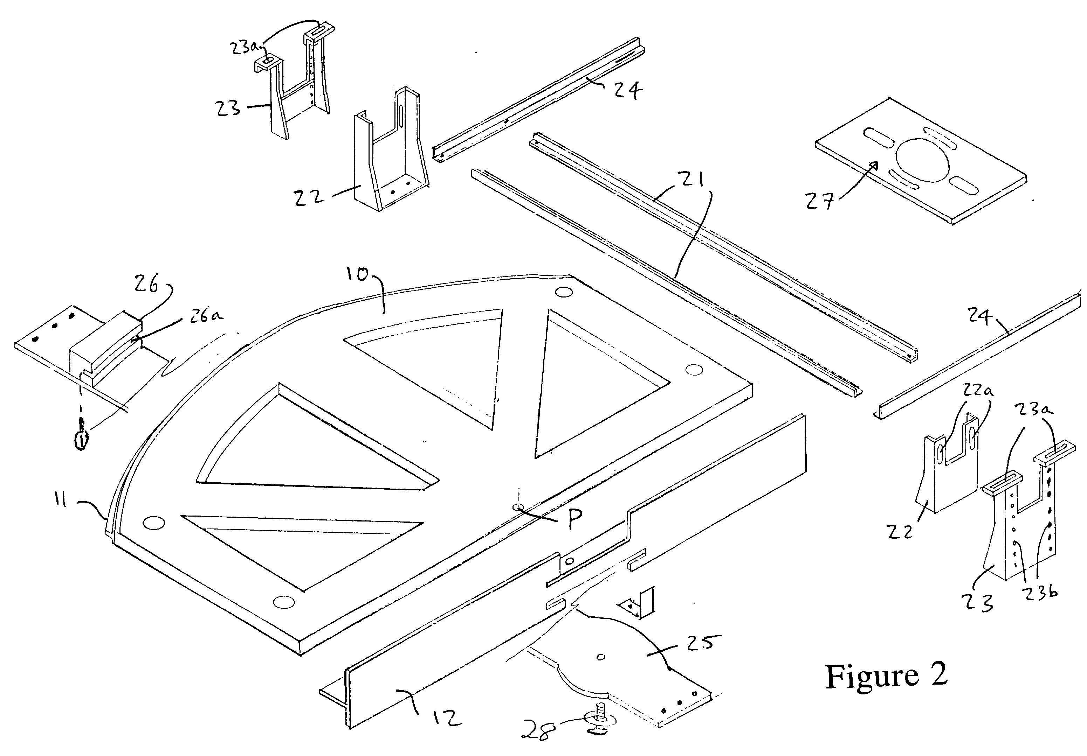

The guide arm assembly 29 comprises a pair of parallel rails 21 mounted at their opposite ends on support members 22 via intermediate extension members 23. The guide rails 21 are bolted to the extension members 23 through slots 23a which enable adjustment of the spacing between the guide rails 21. Figure 2 shows a pair of transverse rails 24 by which, alternatively, the guide rails 21 may be fixed to the tops of the extension members 23. The extension members 23 are bolted to the support members 22 via selected holes 23b and slots 22a, to select the height of the guide rails 21 relative to the base 10.

The support members 22 are fixed to respective ends of an elongate arm 25 which extends below the base 10 and is pivoted to the base 10 at a point P, which is at the centre of the front, diametral edge of the base. The pivot is provided by a bolt 28 which connects the guide arm assembly 20 to the base 10 such that removal of the bolt 28 allows the guide arm assembly to be readily removed.

At its outer end, the arm 25 carries a slide member 26 which has a groove 26a to receive the tongue 11 of the arcuate edge of the base 10. The slide member 26 includes a clamping screw 26b which, when tightened, serves to clamp the slide member 26 against the tongue 11 and so hold the arm 25 firmly in position.

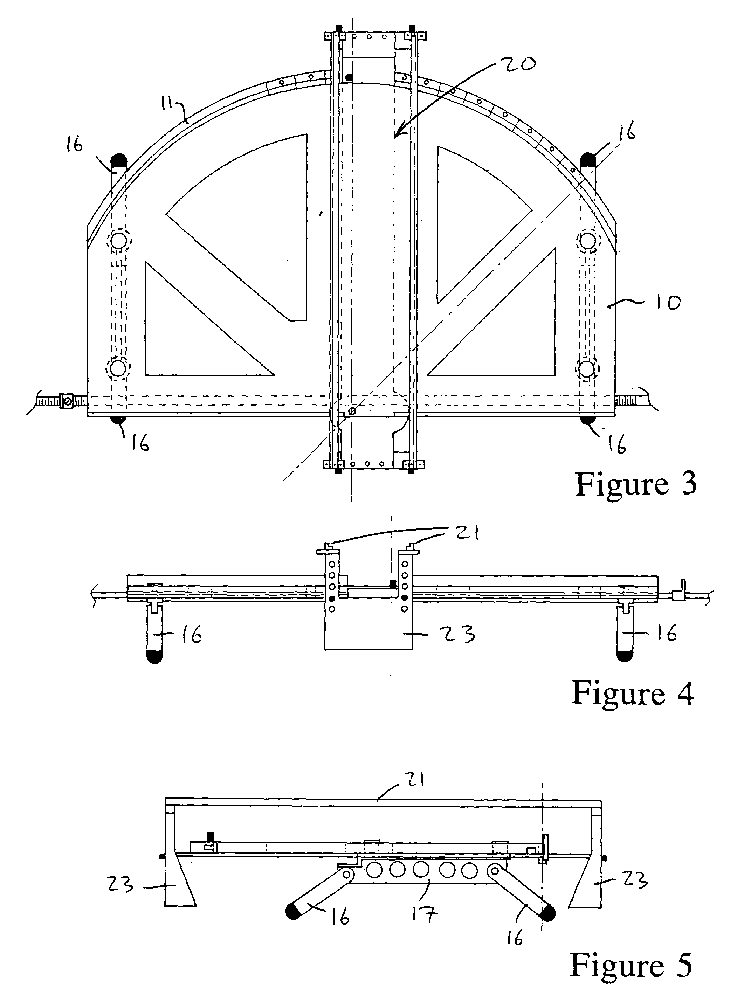

As shown in Figures 3 and 4, the pivot point P, is laterally offset from the longitudinal axis of the guide arm assembly 20 in order to align the blade of the circular saw S with the pivot point. The saw S may include a sole plate which will fit between the guide rails 21 for sliding movement along them: alternatively, a sliding adaptor plate 27 (Figure 2) may be provided, to which the saw S (or other tool) can be mounted.

A pair of folding feet 16 are carried by a bracket 17 which is mounted to the underside of the base 10 at each of its opposite ends, so that the jig can be set up on any reasonably level work surface or bench. The jig may instead be fitted with adjustable legs for standing on the ground to bring the base 10 to bench level.

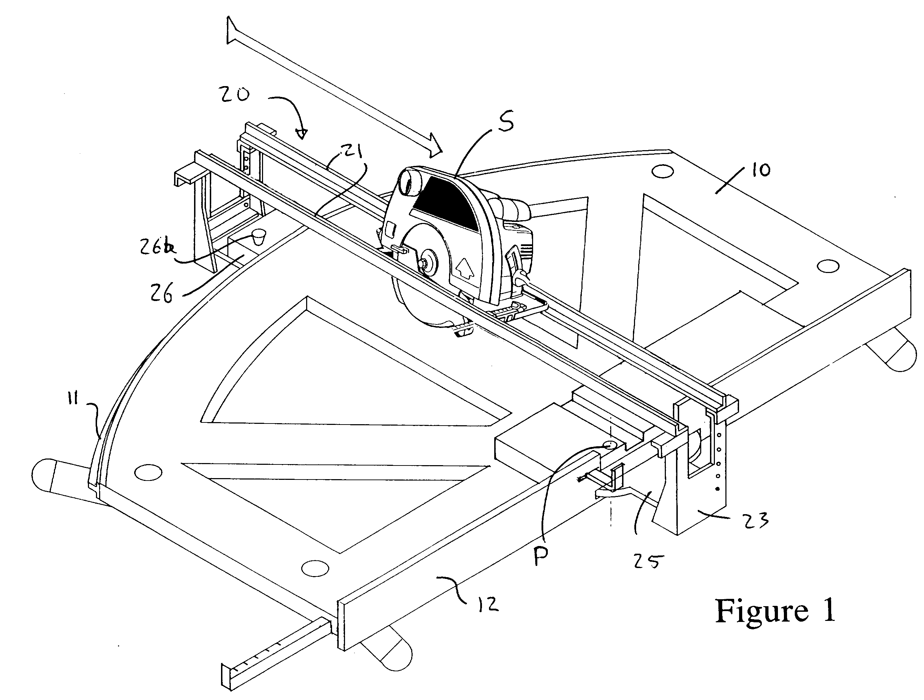

It will be appreciated that, in use, a workpiece is position on the base 10 and against the rear of the upstanding faceplate 12. The guide arm assembly 20 is turned, around pivot point P, to the required angular position, then clamped in that position by tightening the screw 26b. The saw S is adjusted to set its blade at the required angle, and then supported on the guide rails 21, the rails 21 having been set at the height required to predetermine the desired depth of cut into the workpiece. The saw S is then switched on and slid along the rails 21, in the direction indicated by the arrow in Figure 1, to cut the workpiece. As shown in Figure 1, preferably the supports 22 and their extension members 23 are cut-away at their tops, between the rails 21, so that the saw blade may pass without interference. The top edge of the faceplate 12 is similarly cut-away over a central portion thereof.

Adjustable stops 18 are mounted to each end of the base 10, against which an elongate workpiece may be positioned. A cutting guide 19 is pivoted to the faceplate 12 and may be turned through 90° from the position shown in Figure 1, to lie in line with the faceplate: its outer end then corresponds with the line through which the saw blade will pass, and the workpiece can be positioned so that a required cut-line marked on it is aligned with the outer end of the guide 19. An alternative cutting guide may be provided for use when the saw blade is angled at 45°.

Whilst the jig has been described for use with a circular saw, other power tools, particularly a router may be used.

The jig allows accurate angled cuts etc to be formed in a workpiece, and is compact, and relatively straightforward to manufacture and use.

## Claims

1. A jig for using a power tool on a workpiece, the jig comprising a base and a guide arm assembly, the guide arm assembly being pivoted to said base for turning in a plane parallel to the base, and the guide arm assembly being arranged to support a power tool to travel its length to operate upon a workpiece when located upon the base.

2. A jig as claimed in claim 1, comprising means for locking the guide arm assembly at a selected angle of pivoting.

3. A jig as claimed in claim 1 or 2, in which the base is formed with an arcuate outer edge and the guide arm assembly has an outer end which engages said arcuate outer edge of the base.

4. A jig as claimed in claim 3, in which said outer end of the guide arm assembly engages said arcuate outer edge of the base as a tongue-and-groove engagement.

5. A jig as claimed in any preceding claim, comprising means for adjusting the height of the guide arm assembly above the base.

6. A jig as claimed in any preceding claim, in which the guide arm assembly comprises an arm which extends under the base and supports, at its opposite ends a support portion which extends over the base to support the power tool.

7. A jig as claimed in claim 7, in which said support portion comprises at least one rectilinear rail extending parallel to a longitudinal axis of the guide arm assembly, said rail being arranged for guiding the power tool.

8. A jig as claimed in claim 7, comprising means for adjusting the distance of said at least one rail from said longitudinal axis.

9. A jig as claimed in any preceding claim, in which the base is fitted with a set of feet.

10. A jig as claimed in any preceding claim, in which the base is provided with a set of extendable legs.

11. A jig as claimed in any preceding claim, in which the base comprises a projecting faceplate against which a workpiece may be held.

12. A jig as claimed in claim 11, in which the faceplate extends along a line which passes through the pivotal axis of the guide arm assembly.
